# FASCICULE DE BREVET EUROPEEN

(11) **EP 1 492 737 B1**
(45) Date de publication et mention de la délivrance du brevet: **11.07.2018**
(21) Numéro de dépôt: 03745837.9
(22) Date de dépôt: 09.04.2003
(51) Int. Cl.: C03C 17/04

(54) **PLAQUE VITROCERAMIQUE**
GLASKERAMIKPLATTE
GLASS-CERAMIC PLATE

(30) Priorité: 10.04.2002 FR 0204446
(43) Date de publication de la demande: 05.01.2005
(73) Titulaire: Eurokera S.N.C., 02405 Château-Thierry Cedex (FR)
(72) Inventeur: VILATO, Pablo, 75014 Paris (FR); MOREIRA, Sergio, 02400 Château-Thierry (FR)
(74) Mandataire: Saint-Gobain Recherche
(86) Numéro de dépôt international: PCT/FR2003/001112
(87) Numéro de publication internationale: WO 2003/084891

(56) Documents cités:
- EP-A- 0 716 270
- EP-A- 0 861 014
- DE-U- 20 019 210
- FR-A- 2 765 570
- FR-A- 2 766 816
- JP-A- 2001 233 636
- US-B1- 6 369 365

## Description

La présente invention concerne une plaque vitrocéramique destinée, notamment, à couvrir des éléments de chauffage, en particulier destinée à servir de plaque de cuisson, les éléments de chauffage sous-jacents associés à cette plaque étant par exemple des foyers halogène ou radiant ou de chauffage par induction.

Rappelons qu'une vitrocéramique est à l'origine un verre, dit verre précurseur, dont la composition chimique spécifique permet de provoquer par des traitements thermiques adaptés, dits de céramisation, une cristallisation contrôlée. Cette structure spécifique en partie cristallisée confère à la vitrocéramique des propriétés uniques. Au cours des traitements de céramisation, les phases suivantes sont généralement constatées : une phase de nucléation au cours de laquelle coalescent les noyaux sur lesquels les cristaux se formeront, et une phase de cristallisation au cours de laquelle les cristaux se forment puis croissent. La viscosité du verre diminue lors du chauffage initial, présente un minimum juste avant cristallisation puis augmente sous l'effet de la cristallisation. La nucléation a lieu vers 700°C. La céramisation en matériau transparent s'effectue vers 900°C alors que celle en matériau opaque s'effectue vers 1100°C, l'opalisation commençant vers 1000°C.

Pour pouvoir être utilisée comme plaque de cuisson avec des éléments de chauffage sous-jacents, une plaque vitrocéramique doit répondre à un certain nombre de critères, notamment elle doit présenter une transmission dans les longueurs d'onde du domaine du visible à la fois suffisamment basse pour masquer au moins une partie des éléments de chauffage sous-jacents et pour éviter l'éblouissement de l'utilisateur par ces mêmes éléments de chauffage sous-jacents en état de marche et suffisamment élevée pour que, dans un but de sécurité, l'utilisateur puisse détecter visuellement les éléments de chauffage en état de marche. Elle doit également présenter une transmission élevée dans les longueurs d'onde du domaine de l'infrarouge.

Les premières plaques mises au point répondant aux critères précédemment définis ont été des plaques de couleur sombre, en particulier noires. Plus récemment, d'autres plaques ont été mises au point d'aspect plus clair (en particulier blanches), et présentant par exemple un flou d'au moins 50 % (comme décrit dans le brevet FR2766816). Cependant, le choix des plaques actuellement disponibles répondant aux critères précités reste limité, un changement de composition des plaques ou d'un paramètre de leur procédé de céramisation (par exemple la température) pouvant nuire à l'obtention des propriétés recherchées. En outre, sur certaines plaques, telles que des plaques d'aspect laiteux obtenues selon le brevet FR2766816, l'obtention d'un juste compromis entre les critères précédemment mentionnés (tels que la détection des éléments de chauffage en état de marche sans éblouissement ou vision peu esthétique desdits éléments) se fait au détriment d'une bonne vision d'afficheurs éventuels (indicateurs de puissance, de durée, etc.) disposés sous la plaque.

Un but de la présente invention a donc été de mettre au point des plaques présentant de nouveaux aspects en harmonie avec du mobilier de cuisine plus varié et/ou présentant de nouveaux aspects plus fonctionnels, en particulier des aspects plus hétérogènes ou différenciés pour une meilleure fonctionnalité par zones, par exemple pour une meilleure vision des afficheurs, sans pénalisation des autres critères recherchés, ces aspects et les caractéristiques optiques restant notamment compatibles avec une utilisation d'éléments de chauffage sous-jacents, en particulier avec des éléments de chauffage électrique par induction.

Ce but a été atteint avec la plaque selon l'invention, cette plaque, destinée notamment à couvrir des éléments de chauffage, étant une plaque vitrocéramique telle que définie en revendication 1. Elle peut être en outre pourvue sur au moins une face d'au moins un aplat d'émail. Avantageusement, la surface couverte par l'émail représente alors au moins 40 % de la surface d'une face. Avantageusement également, on entend par « face », une des faces de plus grandes dimensions de la plaque, c'est à dire la face tournée vers l'utilisateur en position d'utilisation (face supérieure ou extérieure) ou la face tournée vers les éléments de chauffage en position d'utilisation (face inférieure ou intérieure), par opposition au(x) chant(s) (ou épaisseur) de la plaque.

Préférentiellement, le revêtement (aplat d'émail et/ou couche de peinture) couvre l'essentiel de la surface d'une face à l'exception, le cas échéant (éventuellement et si souhaité), de zones fonctionnelles (zones de chauffe et/ou d'affichage) et/ou décoratives (motif(s) en « négatif », c'est-à-dire formés par les jours laissés dans le revêtement de peinture et/ou d'émail, la couleur de ces motifs étant alors généralement celle conférée par la composition de la plaque).

Jusqu'à présent, il existait un à priori négatif au revêtement d'une surface importante de la plaque, en raison de problèmes de pérennité (dégradation de la peinture par abrasion ou chauffage) ou d'esthétique (apparition de craquelures dans l'émail) survenus lors d'essais sur les premières plaques noires à coefficient de dilatation nul mises au point. Le dépôt d'une composition sur la plaque restait donc limité à des zones réduites (élément de décor, indication de la marque ou entourage des zones de chauffe).

Avantageusement, la présente invention a mis en évidence que des zones plus grandes, notamment toute la face d'une plaque, pouvaient être recouvertes par un aplat d'émail et/ou une couche de peinture, en particulier dans le cas des plaques vitrocéramiques à coefficient de dilatation non nul et/ou des plaques d'aspect clair (telles que celle décrite dans le brevet FR2766816) existantes.

Par « aplat », on entend une couche présentant au moins une partie continue sur au moins un centimètre dans au moins une direction dans le plan de la plaque (en particulier une partie dénuée de perforations ayant pour objet de relâcher les contraintes du matériau en cas de variation thermique), et de préférence sur une surface d'au moins un cm² dans le plan de la plaque. On entend également préférentiellement que cette couche est faite en une seule opération (ou passe). Même si cette couche présente en au moins un endroit une continuité d'au moins un cm ou cm² comme défini précédemment, elle peut également présenter des discontinuités de façon par exemple à former un motif ou laisser des parties apparentes, de même que la couche de peinture, qui est aussi préférentiellement un aplat, peut présenter des discontinuités.

Il est également possible de revêtir la plaque selon l'invention de plusieurs couches d'émail et/ou de peinture et/ou de revêtir au moins une partie de chacune des faces de plus grandes dimensions. Les couches peuvent être de compositions identiques ou différentes, se superposer ou être distinctes, et sont généralement déposées sur chaque face concernée en autant d'opérations que de compositions distinctes. On peut ainsi envisager de former plusieurs zones, chacune recevant au moins une couche d'émail et/ou de peinture de composition différente selon la zone, une même plaque pouvant ainsi présenter différents coloris et les différentes zones précitées pouvant également former des motifs.

Par ailleurs, dans les modes de réalisation les plus simples comprenant une simple couche sur l'essentiel d'une ou de chaque face, le revêtement forme ainsi, le cas échéant combinée avec la couleur de la vitrocéramique, le fond ou la trame donnant l'aspect général (principalement en termes de coloration) de la plaque.

Les zones non couvertes (ou épargnes ou réserves) peuvent avantageusement former des motifs, des marques, peuvent permettre de mieux voir les afficheurs ou des indicateurs lumineux, par exemple de couleurs différentes, placés sous la plaque (le bandeau avant - en position d'utilisation - de la plaque peut rester dénué de revêtement et le cas échéant transparent lorsqu'il loge par exemple les afficheurs), avantage qui ne pourrait pas être obtenu, par exemple, avec des plaques simplement colorées dans la masse, ou qui ne sauraient être obtenus sans inconvénients en raboutant différentes parties indépendantes (par exemple en rajoutant un bandeau transparent portant les afficheurs à une plaque vitrocéramique translucide, cette solution engendrant des problèmes de pérennité de l'assemblage).

La surface couverte par l'émail et/ou la peinture dans la présente invention représente de préférence au moins 50 % de la surface d'une face, et de façon particulièrement préférée au moins 95 % (voire représente 100%) de la surface d'une face ou de la surface de ladite face moins la zone des afficheurs (et éventuellement moins les zones de chauffe).

L'invention propose donc une nouvelle gamme de plaques vitrocéramiques, notamment des plaques vitrocéramiques de couleur et des plaques de coloration et/ou transmission lumineuse différenciées, autorisant plus de fantaisie et de diversité en terme de décoration et d'harmonisation avec le mobilier et/ou présentant une meilleure fonctionnalité. De par le choix de ses matériaux constitutifs, elle reste apte à l'utilisation en tant que plaque de cuisson, sans risques de dégradation de la plaque.

Selon un premier mode préféré de réalisation de l'invention, la plaque selon l'invention est une plaque vitrocéramique transparente ou translucide munie d'au moins une couche de peinture sur sa face inférieure, à l'exception, le cas échéant, de zones décoratives et/ou fonctionnelles telles que la zone des afficheurs voire également les zones de chauffe lorsque l'on utilise des éléments de chauffage électriques radiants ou halogènes. De préférence, la plaque est munie d'une seule couche de peinture sur l'essentiel de sa surface (à l'exception, le cas échéant, de zones fonctionnelles et/ou décoratives), la peinture étant blanche ou de couleur (autre que noire).

La peinture utilisée pour former la plaque présente une température de dégradation supérieure ou égale à 350°C (plus précisément comprise entre 350°C et 500°C). C'est une peinture à base de résine(s) silicone(s), et de façon particulièrement préférée, elle comprend une ou des résines alkydes silicones (c'est-à-dire une ou des résines silicones modifiées par l'incorporation de résine(s) alkyde(s)). Cette peinture peut également comprendre des pigments (par exemple elle peut comprendre du TiO₂ dans le cas d'une peinture blanche), de préférence des pigments pour émaux (dans des proportions n'excédant pas 50 % en poids) selon la coloration désirée. Elle est éventuellement diluée en vue de son application sur la vitrocéramique pour ajuster sa viscosité, le diluant ou solvant (par exemple du white spirit, du toluène, etc.) étant le cas échéant éliminé lors de la cuisson ultérieure de la peinture.

La peinture telle que sélectionnée combinée à la vitrocéramique transparente permet de masquer suffisamment les éléments sous-jacents sans toutefois empêcher leur détection visuelle en état de marche, présente peu de risques d'altération, en particulier par les changements de température, les risques d'altération par produits chimiques, frottement étant encore diminués lorsque la couche de peinture se trouve en face inférieure de la plaque.

Selon un second mode de réalisation préféré de l'invention, la plaque selon l'invention est une plaque vitrocéramique munie en outre d'au moins un aplat d'émail (à l'exception éventuellement de zones fonctionnelles et/ou décoratives) sur sa face supérieure (l'émail déposé en face inférieure pouvant fragiliser la plaque). Avantageusement, l'épaisseur de l'aplat d'émail (ou de chaque couche d'émail déposée) est inférieure à 5 µm et de préférence inférieure ou égale à environ 3.5 µm. De préférence également, la plaque est revêtue d'un seul aplat d'émail, en une seule passe, cet aplat couvrant l'essentiel de la face supérieure de la plaque (à l'exception, le cas échéant (éventuellement), de zones fonctionnelles telles que la zone des afficheurs et/ou décoratives) et étant, de façon particulièrement préférée, un émail de couleur autre que noire ou blanche.

L'émail peut être choisi parmi les compositions d'émail existantes et est généralement formé (avant application sur la plaque et cuisson) d'une poudre comprenant une fritte de verre (devant former la matrice vitreuse) et des pigments (en tant que colorants notamment, ces pigments pouvant également faire partie de la fritte), la fritte et les pigments étant à base d'oxydes métalliques, et d'un médium ou « véhicule » permettant l'application et l'adhésion temporaire de l'émail sur un substrat. La fritte de verre est un mélange vitrifiable comprenant des oxydes choisis notamment parmi les oxydes communément employés dans les frittes pour émail, par exemple choisis parmi les oxydes de silicium, de zinc, de bismuth, de sodium, de bore, de lithium, de potassium, de calcium, d'aluminium, de magnésium, etc. ou encore parmi les oxydes de baryum, de strontium, d'antimoine, etc. Le taux de pigment(s) dans l'ensemble fritte(s)/pigment(s) de l'émail est généralement compris entre 10 et 50 % en poids (par rapport à l'ensemble fritte(s)/pigment(s)). Le médium, choisi afin d'assurer une bonne mise en suspension des particules des frittes et pigments et devant se consumer au plus tard lors de la cuisson de l'émail, peut comporter des solvants, des diluants, des huiles, des résines, etc.

Les pigments pour émaux (qu'ils fassent partie de la peinture et/ou de l'émail utilisé(s) selon l'invention) peuvent être choisis parmi les composés contenant des oxydes métalliques tels que des oxydes de chrome, des oxydes de cuivre, des oxydes de fer, des oxydes de cobalt, des oxydes de nickel, ou peuvent être choisis parmi les chromates de cuivre, les chromates de cobalt, etc. Ils sont utilisés, le cas échéant, dans la peinture et/ou l'émail en fonction de la coloration que l'on souhaite obtenir.

Selon un mode de réalisation de l'invention, la plaque est ainsi à la fois revêtue d'au moins une couche d'émail sur sa face supérieure et d'au moins une couche de peinture sur sa face inférieure, l'ensemble des couches modifiant la visibilité au travers de l'essentiel de la plaque, même si l'une des couches peut être de faible étendue (par exemple l'émail formant seulement un décor).

De préférence également, la vitrocéramique présente un coefficient de dilatation proche de zéro mais non nul (par exemple supérieur à 4.10⁻⁷ K⁻¹), en particulier un coefficient de dilatation inférieur à 15.10⁻⁷ K⁻¹, par exemple de l'ordre de 9.10⁻⁷ K⁻¹, notamment dans le cas où la plaque est revêtue d'au moins un aplat d'émail.

De préférence également, la vitrocéramique revêtue est transparente ou translucide.

La plaque selon l'invention est à base d'une vitrocéramique de couleur claire (autre que noire ou marron), cette base claire apportant notamment un brillant supplémentaire à la plaque revêtue, par exemple est une plaque en vitrocéramique de couleur blanche ou crème (ou éventuellement colorée dans la masse avec toute autre teinte claire). Cette vitrocéramique présente les coordonnées colorimétriques suivantes : une valeur de L* comprise entre 82 et 87, une valeur de a* comprise entre - 3.0 et - 0.5 et une valeur de b* comprise entre - 4.0 et + 4.0 (le système de coordonnées L*, a*, b* utilisé dans de nombreux domaines a notamment fait l'objet de recommandations officielles - cf. Commission Internationale de l'Eclairage, Colorimetry- Recommandations Officielles -Publications CIE n° 15-2, Vienne, 1986- les mesures de transmission pour déterminer ces valeurs étant généralement effectuées sous illuminant D65).

La plaque selon l'invention est plus précisément à base d'une vitrocéramique obtenue par céramisation à partir d'un verre de composition suivante exprimée en pourcentages pondéraux :

| | |
|---|---|
| SiO₂ | 63-70 |
| Al₂O₃ | 18-22 |
| Li₂O | 2,5-4,5 |

De préférence, la vitrocéramique présente un flou comme défini dans le brevet FR 2766816 (le flou mesurant le niveau de diffusion lumineuse et étant défini comme étant le rapport de la transmission diffuse sur la transmission totale à une longueur d'onde égale à 550 nm), en particulier un flou d'au moins 50 % et de préférence inférieur à 98 %. La vitrocéramique est « sous-céramisée » ou céramisée à (plus) basse température, c'est-à-dire céramisée en utilisant un cycle de céramisation connu dans lequel on abaisse la température du palier de céramisation de une à quelques dizaines de degrés, en particulier dans le cas où l'on utilise le cycle de céramisation permettant d'obtenir les plaques présentant un flou d'au moins 50 % conformément au brevet FR 2766816, comme décrit ultérieurement. La vitrocéramique ainsi céramisée à plus basse température permet de mieux voir les éléments tels que des afficheurs, l'augmentation de transparence sur le reste de la plaque étant alors compensée par la présence de la ou des couches précitées selon l'invention, notamment par la présence d'au moins une couche de peinture couvrant la plaque, de préférence en face inférieure, à l'exception de l'épargne ménagée pour voir les éléments tels que les afficheurs.

Dans un mode de réalisation dans lequel la vitrocéramique doit présenter un aspect blanc laiteux, la céramisation à plus basse température pouvant légèrement altérer la couleur et le brillant (effet jaune gris), l'application d'une peinture blanche en face inférieure de la plaque (excepté à l'endroit des afficheurs) permet de compenser les effets de la céramisation à basse température et de retrouver une plaque à fond blanc à l'aspect lumineux.

Le substrat en vitrocéramique utilisé pour former la plaque selon l'invention peut être lisse, plan, ou présenter des parties inclinées ou comporter (en face supérieure notamment) au moins une zone en relief et/ou au moins une zone en creux et/ou au moins une ouverture, par exemple, dans le cas d'une cuisson par gaz, au moins une ouverture destinée à recevoir un brûleur à gaz atmosphérique. Il peut être prévu que cette ouverture soit façonnée et qu'elle soit au sommet d'une déformation locale de la plaque tel que décrit dans le brevet FR2763583. La face inférieure peut être lisse ou présenter des reliefs et/ou des évidements ; généralement, elle présente des petits reliefs ou picots conférant une meilleure tenue mécanique à la plaque.

La présence de picots pouvant perturber le cas échéant la vision des afficheurs, la plaque selon l'invention peut également présenter sur sa face inférieure au moins une couche d'une résine (communément appelée résine d'indice) de même indice optique que celui de la vitrocéramique afin de remplir les creux entre les picots dans les régions destinées à venir en regard des afficheurs.

La plaque selon l'invention peut également être munie de (ou associée avec des) éléments fonctionnels ou de décor, généralement rapportés, tels qu'un cadre, un ou des connecteurs et/ou câbles, un ou des éléments de commande, un ou des afficheurs par exemple de puissance (tels que des afficheurs dits « à 7 segments »), un bandeau de commande électronique à touches sensitives et affichage digital, etc. Dans un mode de réalisation préféré où des afficheurs sont prévus sous la plaque, des épargnes peuvent être prévues dans la ou les couches d'émail et/ou de peinture aux emplacements destinés à venir en regard de ces afficheurs, comme mentionné précédemment.

De préférence, la plaque selon l'invention est destinée à être associée à des éléments sous-jacents de chauffage par induction. Les foyers de cuisson à chauffage par induction sont connus et se composent généralement d'un convertisseur (ou générateur) relié à une self (ou inducteur) constituée par un bobinage de fils conducteurs. Le champ électromagnétique créé par le passage d'un courant haute fréquence produit par le convertisseur génère des courants de Foucault dans le fond métallique des ustensiles disposés sur la plaque, permettant la chauffe rapide de ces ustensiles. Les variations et maxima de températures subis par la plaque sont moins importants que ceux que l'on observe avec d'autres éléments de chauffage, par exemple halogène ou radiant, de ce fait la plaque selon l'invention est particulièrement bien adaptée à ce mode de chauffage, les chocs thermiques subis par la peinture et/ou l'émail étant moins importants et moins susceptibles de l'endommager à long terme.

Les plaques selon l'invention satisfont aux impératifs en termes de propriétés optiques, de sécurité, elles présentent une bonne perméabilité au rayonnement de 10 à 50 kHz, une bonne résistance aux chocs thermiques, etc. Selon une caractéristique avantageuse, la plaque selon l'invention présente une transmission lumineuse T_{L} comprise entre 5 et 40%.

La plaque selon l'invention peut avantageusement être montée sur le support isolant, à l'intérieur duquel sont disposés le ou les éléments de chauffage tels que inducteurs, sans complexe intermédiaire visant à masquer l'intérieur de l'appareil à la vue de l'utilisateur.

L'invention concerne aussi les appareils (ou dispositifs) de cuisson et/ou de maintien à haute température comportant au moins une plaque selon l'invention (par exemple cuisinières, et plaques de cuisson encastrables). L'invention englobe aussi bien des appareils de cuisson comportant une seule plaque que des appareils comportant plusieurs plaques, chacune de ces plaques étant à feu unique ou à feux multiples. Par le terme « feu », on entend un emplacement de cuisson. L'invention concerne également des appareils de cuisson mixtes dont la ou les plaques de cuisson comportent plusieurs types de feux (feux à gaz, feux radiants, halogènes ou à induction).

En outre, l'invention n'est pas limitée à la fabrication de plaques de cuisson pour cuisinières ou tables de cuisson, même si le problème à la base de l'invention est défini en relation avec cette application. Les plaques fabriquées conformément à l'invention peuvent également être des vitrages pour cheminées ou d'autres plaques qui doivent présenter une grande insensibilité aux variations de température.

Dans le procédé de fabrication d'une plaque selon l'invention, on effectue au moins un cycle de céramisation d'une plaque de verre, au moins une des faces de la plaque étant revêtue d'au moins une couche de peinture telle que précédemment définie après le cycle de céramisation, et éventuellement au moins une des faces de la plaque étant revêtue d'au moins une couche d'émail avant le cycle de céramisation.

Le cycle de céramisation comporte un palier de cristallisation d'une durée t à une température T, ce cycle aboutissant à une ou des phases cristallines β-quartz et/ou β-spodumène selon le type de vitrocéramique que l'on souhaite obtenir (transparente, translucide ou opaque). Avantageusement selon la présente invention, on utilise une composition de verre permettant d'obtenir une plaque blanche présentant un flou d'au moins 50% et on applique le cycle de céramisation permettant d'obtenir ladite plaque en abaissant toutefois la température du palier de céramisation (diminution de l'ordre de 10 à 60°C). La céramisation est effectuée en particulier comme décrit dans les exemples 2 à 4 du brevet FR2766816 mais à une température de l'ordre de 1020-1040°C au lieu d'une température de 1050-1070°C. Cette « sous-céramisation » présente l'avantage de permettre une meilleure vision au travers des parties de la plaque non revêtues de peinture ou d'émail (par exemple une bonne vision des afficheurs), la coloration et transmission lumineuse de la plaque étant conservée sur les autres parties par rapport à la plaque translucide décrite dans le brevet précédent du fait de la présence de la ou des couches précitées choisies en fonction de la couleur recherchée.

La peinture et/ou l'émail sont généralement appliqués par sérigraphie. Après application sur la face visée, plane ou structurée, la ou les couches sont cuites, soit pendant le cycle de céramisation pour l'émail, soit après le cycle de céramisation pour la peinture en soumettant la plaque vitrocéramique revêtue de peinture à un traitement thermique à des températures comprises entre 80 et 450°C environ pendant quelques dizaines de secondes à quelques dizaines de minutes (généralement pendant 1 minute à 1 heure). Dans le cas où l'on dépose une résine d'indice sur la plaque dans des épargnes à l'endroit des afficheurs, cette résine est généralement déposée après céramisation de la plaque et le cas échéant après cuisson de la peinture et est préférentiellement séchée à l'air libre.

D'autres détails et caractéristiques avantageuses ressortiront ci-après de la description d'un exemple de réalisation d'une plaque selon l'invention, non limitatif :
Celle-ci est à base d'une vitrocéramique formée à partir d'un verre de composition proche ou identique de celle indiquée dans les exemples du brevet FR2766816. Ce verre est fondu aux alentours de 1650°C, en une quantité telle qu'un ruban de verre puisse être laminé, ruban dans lequel des plaques de verre de dimensions finales 56,5 cm x 56,5 cm x 0,4 cm sont découpées.

Ces plaques de verre sont céramisées sur des grilles céramiques selon un cycle de céramisation comprenant les étapes suivantes :
a) élévation de la température à 30-80 degrés/minutes jusqu'au domaine de nucléation, généralement situé au voisinage du domaine de transformation du verre ;
b) traversée de l'intervalle de nucléation (670-800°C) en une vingtaine de minutes avec maintien en température de quelques minutes;
c) élévation de la température en 15 à 30 minutes jusqu'à la température T du palier de céramisation de l'ordre de 1030°C ;
d) maintien de la température T du palier de céramisation pendant un temps t de l'ordre de 20 minutes ;
e) refroidissement rapide jusqu'à la température ambiante.

Au bout du cycle de céramisation, la plaque de verre comporte la phase cristalline β-spodumène.

La plaque obtenue est revêtue par sérigraphie sur sa face inférieure, à l'exception de l'emplacement des afficheurs et éventuellement des zones de chauffe, d'une couche de peinture blanche comprenant des résines alkydes silicones, la peinture étant diluée à l'aide de white spirit pour ajuster sa viscosité. La peinture est ensuite cuite dans un four à 140°C pendant 75 secondes.

La plaque selon l'invention ainsi obtenue présente un aspect général blanc laiteux similaire à celui des plaques décrites dans les exemples 2 à 4 du brevet FR2 766 816, à l'exception de l'emplacement des afficheurs et éventuellement des zones de chauffe d'un aspect blanc-gris plus transparent.

Dans une variante, on peut ajouter à la peinture utilisée 15 % en poids de pigments à base de cobalt, afin d'obtenir une plaque colorée à fond bleu (excepté les zones d'épargne).

Les plaques selon l'invention peuvent notamment être utilisées avec avantage pour réaliser une nouvelle gamme de plaques de cuisson pour cuisinières ou tables de cuisson.

## Revendications

1. Plaque vitrocéramique, destinée notamment à couvrir des éléments de chauffage, ladite plaque étant à base d'une vitrocéramique obtenue à partir d'un verre de composition suivante exprimée en pourcentages pondéraux :
| | |
|---|---|
| SiO₂ | 63-70 |
| Al₂O₃ | 18-22 |
| Li₂O | 2,5-4,5 |
et présentant une valeur de L* comprise entre 82 et 87, une valeur de a* comprise entre - 3.0 et - 0.5 et une valeur de b* comprise entre - 4.0 et + 4.0, ladite vitrocéramique étant ceramisee selon un cycle de céramisation comprenant les étapes suivantes :
a) élévation de la température à 30-80 degrés/minutes jusqu'au domaine de nucléation,
b) traversée de l'intervalle de nucléation en une vingtaine de minutes avec maintien en température de quelques minutes;
c) élévation de la température en 15 à 30 minutes jusqu'à la température T du palier de céramisation de 1020°C à 1040 °C;
d) maintien de la température T du palier de céramisation pendant un temps t de l'ordre de 20 minutes ;
e) refroidissement rapide jusqu'à la température ambiante,
ladite plaque étant pourvue sur au moins une face, sur une surface représentant au moins 40% de la surface de ladite face, d'au moins une couche de peinture présentant une température de dégradation comprise entre 350°C et 500°C et étant à base de résine(s) silicone(s).

2. Plaque vitrocéramique selon la revendication 1, **caractérisée en ce que** la peinture comprend des pigments, de préférence des pigments pour émaux.

3. Plaque vitrocéramique selon l'une des revendications 1 à 2, **caractérisée en ce que** la peinture comprend une ou des résines alkydes silicones.

4. Plaque vitrocéramique selon l'une des revendications 1 à 3, **caractérisée en ce qu'**elle est en outre munie d'au moins un aplat d'émail sur sa face supérieure, et de préférence d'un seul aplat d'émail de couleur couvrant l'essentiel de ladite face, à l'exception, le cas échéant, de zones fonctionnelles et/ou décoratives.

5. Plaque vitrocéramique selon l'une des revendications 1 à 4, **caractérisée en ce que** la plaque est à base d'une vitrocéramique translucide.

6. Plaque vitrocéramique selon l'une des revendications 1 à 5, **caractérisée en ce qu'**elle présente des épargnes dans son revêtement, par exemple dans les régions destinées à venir en regard des afficheurs.

7. Plaque vitrocéramique selon la revendication 6, **caractérisée en ce qu'**elle est également revêtue sur sa face inférieure d'au moins une couche d'une résine d'indice dans les régions destinées à venir en regard des afficheurs.

8. Plaque vitrocéramique selon l'une des revendications 1 à 7, **caractérisée en ce qu'**elle est destinée à être associée à des éléments sous-jacents de chauffage par induction.

9. Dispositif de cuisson et/ou de maintien à haute température comportant une plaque vitrocéramique selon l'une des revendications 1 à 8, un ou plusieurs éléments de chauffage tels qu'un élément radiant ou halogène et/ou un ou plusieurs brûleurs à gaz atmosphérique et/ou un ou plusieurs moyens de chauffage par induction.

10. Dispositif selon la revendication 9, **caractérisé en ce que** la plaque est montée sur le support isolant sans complexe intermédiaire visant à masquer l'intérieur de l'appareil à la vue de l'utilisateur.

## Patentansprüche

1. Glaskeramikplatte, die insbesondere vorgesehen ist, Heizelemente zu bedecken, wobei die Platte aus einer Glaskeramik besteht, die aus einem Glas mit folgender Zusammensetzung erhalten wurde, ausgedrückt in Gewichtsprozent:
| | |
|---|---|
| SiO₂ | 63-70 |
| Al₂O₃ | 18-22 |
| Li₂O | 2,5-4,5 |
und einen Wert für L* im Bereich zwischen 82 und 87, einen Wert für a* im Bereich zwischen -3,0 und -0,5 und einen Wert für b* im Bereich zwischen - 4,0 und +4,0 aufweist, wobei die Glaskeramik gemäß einem Keramisierungszyklus keramisiert ist, der die folgenden Schritte umfasst:
a) Erhöhen der Temperatur mit 30-80 Grad/Minute bis zum Keimbildungsbereich,
b) Durchlaufen des Keimbildungsintervalls innerhalb von etwa zwanzig Minuten mit Halten auf der Temperatur für einige Minuten;
c) Erhöhen der Temperatur innerhalb von 15 bis 30 Minuten bis auf die Temperatur T der Keramisierungsstufe von 1.020 °C bis 1.040 °C;
d) Halten der Temperatur T der Keramisierungsstufe für eine Zeit t in der Größenordnung von 20 Minuten;
e) schnelles Abkühlen bis auf Umgebungstemperatur,
wobei die Platte auf mindestens einer Seite, auf einer Oberfläche, die mindestens 40 % der Oberfläche der Seite darstellt, mit mindestens einer Farbschicht versehen ist, die eine Zersetzungstemperatur im Bereich zwischen 350 °C und 500 °C aufweist und aus Silikonharz (en) besteht.

2. Glaskeramikplatte nach Anspruch 1, **dadurch gekennzeichnet, dass** die Farbe Pigmente, vorzugsweise Pigmente für Email umfasst.

3. Glaskeramikplatte nach einem der Ansprüche 1 bis 2, **dadurch gekennzeichnet, dass** die Farbe ein oder mehrere Silikon-Alkydharze umfasst.

4. Glaskeramikplatte nach einem der Ansprüche 1 bis 3, **dadurch gekennzeichnet, dass** sie außerdem mit mindestens einer Emailfläche auf ihrer Oberseite und vorzugsweise mit einer einzigen Emailfarbfläche ausgestattet ist, die den Großteil der Seite bedeckt, gegebenenfalls mit Ausnahme von funktionalen und/oder dekorativen Zonen.

5. Glaskeramikplatte nach einem der Ansprüche 1 bis 4, **dadurch gekennzeichnet, dass** die Platte aus einer lichtdurchlässigen Glaskeramik besteht.

6. Glaskeramikplatte nach einem der Ansprüche 1 bis 5, **dadurch gekennzeichnet, dass** sie, zum Beispiel in den Regionen, die den Anzeigen gegenüberliegen sollen, Aussparungen in ihrer Beschichtung aufweist.

7. Glaskeramikplatte nach Anspruch 6, **dadurch gekennzeichnet, dass** sie auch auf ihrer Unterseite in den Regionen, die den Anzeigen gegenüberliegen sollen, mit mindestens einer Schicht aus einem Indexharz beschichtet ist.

8. Glaskeramikplatte nach einem der Ansprüche 1 bis 7, **dadurch gekennzeichnet, dass** sie dazu bestimmt ist, mit darunterliegenden Elementen zur Induktionsheizung verbunden zu werden.

9. Hochtemperaturkoch- und / oder -haltevorrichtung umfassend eine Glaskeramikplatte nach einem der Ansprüche 1 bis 8, ein oder mehrere Heizelemente, wie ein Strahlungs- oder Halogenelement und/oder einen oder mehrere atmosphärische Gasbrenner und/oder ein oder mehrere Induktionsheizungseinrichtungen.

10. Vorrichtung nach Anspruch 9, **dadurch gekennzeichnet, dass** die Platte auf dem isolierenden Träger ohne zwischengeschalteten Komplex angebracht ist, der dazu dient, das Innere der Vorrichtung vor dem Benutzer zu verbergen.

## Claims

1. Glass-ceramic plate, intended especially for covering heating elements, said plate being based on a glass-ceramic obtained from a glass having the following composition expressed in percentages by weight:
| | |
|---|---|
| SiO₂ | 63-70 |
| Al₂O₃ | 18-22 |
| Li₂O 0 | 2.5-4.5 |
and having an L* value of between 82 and 87, an a* value of between -3.0 and -0.5 and a b* value of between -4.0 and +4.0, said glass-ceramic being ceramified according to a cerframification cycle comprising the following steps:
a) raising the temperature at 30-80 degrees/minute up to the nucleation range,
b) passing through the nucleation range over some twenty minutes with a temperature hold of a few minutes;
c) raising the temperature over 15 to 30 minutes to the ceramification hold temperature T of from 1020°C to 1040°C;
d) holding the ceramification hold temperature T for a time t of about 20 minutes; and
e) rapidly cooling down to room temperature,
said plate being provided on at least one face, over an area representing at least 40% of the surface of said face, with at least one coat of paint having a degredation temperature of between 350°C and 500°C and being based on silicone resin(s).

2. Glass-ceramic plate according to Claim 1, **characterized in that** the paint includes pigments, preferably pigments for enamels.

3. Glass-ceramic plate according to either of Claims 1 and 2, **characterized in that** the paint comprises one or more silicone alkyd resins.

4. Glass-ceramic plate according to one of Claims 1 to 3, **characterized in that** it is furthermore provided with at least one enamel patch on its upper face, and preferably with a single colored enamel patch covering over most of said face, with the exception, where appropriate, of functional and/or decorative areas.

5. Glass-ceramic plate according to one of Claims 1 to 4, **characterized in that** the plate is based on a translucent glass-ceramic.

6. Glass-ceramic plate according to one of Claims 1 to 5, **characterized in that** it has uncoated areas in its coating, for example in the regions intended for facing the displays.

7. Glass-ceramic plate according to Claim 6, **characterized in that** it is also coated on its lower face with at least one coat of an index resin in the regions intended to face the displays.

8. Glass-ceramic plate according to one of Claims 1 to 7, **characterized in that** it is intended to be combined with underlying induction heating elements.

9. Device for cooking and/or holding at high temperature, comprising a glass-ceramic plate according to one of Claims 1 to 8 and one or more heating elements, such as a radiant or halogen element, and/or one or more air/gas burners and/or one or more induction heating means.

10. Device according to Claim 9, **characterized in that** the plate is mounted on the insulating support without an intermediate complex for the purpose of masking the inside of the appliance from the user's view.
